# EUROPÄISCHE PATENTANMELDUNG

(11) **EP 1 389 731 A1**
(43) Veröffentlichungstag der Anmeldung: **18.02.2004**
(21) Anmeldenummer: 02017590.7
(22) Anmeldetag: 07.08.2002
(51) Int. Cl.: G01N 21/51, G01N 21/25, G01N 21/82, G01N 21/03

(54) **Einrichtung und Verfahren zur Bestimmung der Extinktion einer Lichtstrahlung beim Durchdringen einer Probe**

(71) Anmelder: Winkler, Manfred, 01855 Sebnitz (DE)
(72) Erfinder: Winkler, Manfred, 01855 Sebnitz (DE)
(74) Vertreter: Weissfloh, Ingo

(57) **Zusammenfassung**

Der Erfindung liegt das Problem zugrunde, das Verfahren zur Bestimmung der Extinktion der Lichtstrahlung durch eine Probe zu verbessern, insbesondere eine schnellere und verbesserte Auswertung zu erhalten. Die dazugehörige Einrichtung schafft die Voraussetzung zur Durchführung des verbesserten Verfahrens.

Zur Durchführung des Verfahrens wird eine Einrichtung benutzt, deren Emissionsquelle (1) Licht in einem Wellenbereich zwischen 200 bis 600nm durch einen Lichtschacht (3), der durch eine Probenaufnahme (4) geteilt wird, bis zu einem Lichtsensor (2) mit einem eingeschränkten Empfangsbereich sendet. Die Probenaufnahme (4) und der Lichtschacht (3) mit der Emissionsquelle (1) und dem Lichtsensor (2) sind in einem Metallblock (5) mit einer elektrischen Heizung angeordnet. Das Verfahren ist dadurch gekennzeichnet, dass beim Hineinstellen einer Probe in die Probenaufnahme (4) sich automatisch die Starbedingungen einstellen und dass anschließend bei Zugabe von Flüssigkeit zur Probe der Start der Messungen beginnt und dass der Endwert der Messungen zur Endpunktbestimmung nach 90s aus dem Anstieg mittels eines PC mit einer Spezialsoftware errechnet wird.

## Beschreibung

Die Erfindung betrifft eine Einrichtung und ein Verfahren zur Bestimmung der Extinktion beim Durchdringen einer oder gleichzeitig mehrerer Proben.

In der DE 196 29 992 wird ein Verfahren und eine dazugehörige Einrichtung zur Bestimmung der Extinktion einer Lichtstrahlung durch eine Probe mit einer zu untersuchenden Flüssigkeit beschrieben. Das Verfahren beinhaltet dabei folgende Verfahrensschritte. Die Probe wird als ein erstes Reagenz mit einem zweiten Reagenz vermischt und vor oder kurz nach dem Zusammentreffen der beiden Reagenzien ein erster Extinktionswert bestimmt. Danach wird die Änderung der Extinktion kontinuierlich oder diskontinuierlich bestimmt und der Wert der Änderung und/oder die Geschwindigkeit der Änderung mit Referenzwerten verglichen und die entsprechenden Abweichungen der untersuchten Probe zu einer qualitativen und/oder quantitativen Aussage des zu untersuchenden ersten Reagenz genutzt.
Die Einrichtung besteht aus einem Lichtschacht, in dem die Probe in einem Messschacht angeordnet ist. An dem einem Ende des Lichtschachtes ist eine Lichtquelle und am andren Ende ein Lichtsensor angeordnet. Dem Lichtsensor ist eine elektronische Messwerterfassungseinheit nachgeschaltet, die die analogen Messwerte der Extinktion in digitale Werte wandelt und bei Bedarf speichert.

Der Erfindung liegt das Problem zugrunde, das Verfahren zur Bestimmung der Extinktion der Lichtstrahlung durch eine Probe zu vervollkommnen und zu verbessern, insbesondere eine schnellere und verbesserte Auswertung zu erhalten. Die dazugehörige Einrichtung schafft die Voraussetzung zur Durchführung des verbesserten Verfahrens.

Die mit der Erfindung erzielten Vorteile bestehen neben der bereits erwähnten Zeiteinsparung insbesondere darin, dass die Emissionsquelle eine größere Bandbreite gegenüber herkömmlichen Lösungen besitzt. Der Messbereich der Absorption ist um mindestens 100 nm breiter. Die erfindungsgemäße Einrichtung besitzt eine Regelung zur Einhaltung einer konstanten Temperatur innerhalb der Messeinrichtung. Weiterhin können mehrere Proben mit gleichen Parameter simultan gemessen werden. Die Anzeige einer negativen Extinktion ist möglich. Aufgrund einer technischen Detaillösung startet die Messeinrichtung automatisch den Messvorgang. Der Einsatz eines Barcodes an den Proben und damit die automatische Bestimmung und Zuordnung der Probe ist möglich.

Vorteilhafte Ausgestaltungen der Einrichtung sind in den Ansprüchen 2 bis 7 angegeben. Die Weiterbildung nach Anspruch 2 beinhaltet die Lösung, dass mehrere Lichtschächte mit Probeaufnahmen und dazugehörigen Emissionsquellen und Lichtsensoren, bei denen simultan gemessen werden kann, in der Einrichtung angeordnet sind. Nach Anspruch 3 sind die Probeaufnahmen mit ihren Lichtschächten und den Emissionsquellen und Lichtsensoren in einem Metallblock angeordnet. In diesem Metallblock ist eine elektrische Heizung integriert, die die gesamte Einrichtung bei einer konstanten Temperatur hält. Bei der Weiterbildung nach Anspruch 4 ist in die Einrichtung mit einem Mikroprozessor und einem Drucker ausgerüstet. Bei der Weiterbildung nach Anspruch 5 ist die Einrichtung in einen Vorbereitungs- und in einen Messbereich geteilt. Die Weiterbildung nach Anspruch 6 ermöglicht einen automatischen Start des Messvorganges der Messeinrichtung. Hierzu wird die Änderung der Lichtintensität im Lichtschacht beim Einsetzen einer Probe genutzt. Durch bereits bekannte Schaltungen und Bauelemente wird die Spannung und der Strom der Einrichtung gemäß Anspruch 7 konstant gehalten.
Die Weiterbildungen des Verfahrens sind in den Ansprüchen 8 bis 14 aufgeführt. Alle diese Weiterbildungen dienen zur schnelleren, genaueren und bedienerfreundlicheren Handhabung der Einrichtung.

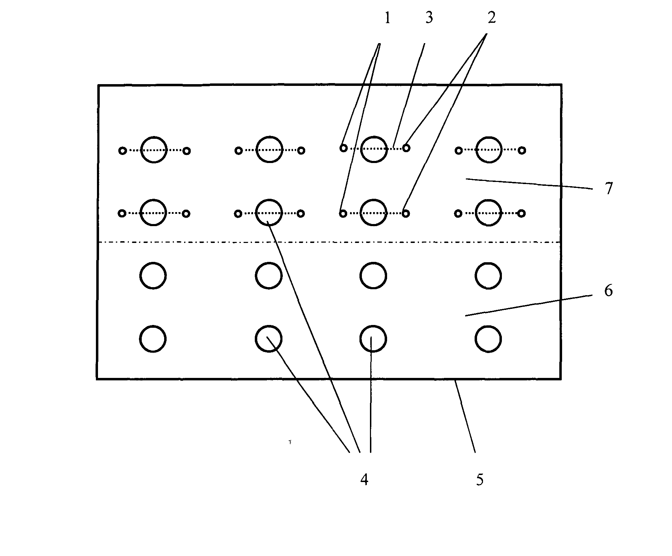

Ein Ausführungsbeispiel der Erfindung ist in der Zeichnung dargestellt und wird im folgenden mit dem Verfahren näher beschrieben.
Die Zeichnung zeigt die Draufsicht auf den Metallblock der Einrichtung, geteilt in den Vorbereitungsbereich 6 und in den Messbereich 7 mit den Probenaufnahmen 4. Im Vorbereitungsbereich 6 besitzen die Probenaufnahmen keine Lichtschächte 3. Im Messbereich besitzen die Probenaufnahmen 4 Lichtschächte 3, an deren Enden die Emissionsquellen 1 und die Lichtsensoren 2 angeordnet sind. Alle anderen Steuerungs-, Regel-, Mess- und Messwerterfassungs- und Messwertauswertungseinrichtungen der erfindungsgemäßen Einrichtung sind nicht dargestellt.

Die Einrichtung zur Bestimmung der Extinktion der Lichtstrahlung einer Emissionsquelle 1 mit stabilisierter Emission durch getriggerte Anregungsbedingungen, beim Durchdringen von Proben mittels Lichtsensor 2 und elektronischer Messwerterfassungseinheit, die die analogen Messwerte der Extinktion in digitale Werte wandelt und bei Bedarf speichert, wobei an einem Ende eines Lichtschachtes 3 die Emissionsquelle 1 und am anderen Ende der Lichtsensor 2 angeordnet ist, besteht aus einer Emissionsquelle 1, die Licht in einem Wellenbereich zwischen 200 bis 600 nm aussendet. Das Licht wird durch einen Lichtschacht 3 gesendet. Am anderen Ende des Lichtschachtes 3 befindet sich als Lichtsensor 2 eine Diode 2. Diese Diode 2 besitzt einen eingeschränkten Empfangsbereich. Der Lichtschacht 3 kreuzt eine Probenaufnahme 4, in die die Proben gestellt werden. Alle diese Probenaufnahmen 4 mit ihren Lichtschächten 3 und den dazugehörigen Emissionsquellen 1, im Ausführungsbeispiel Halogenlampen, und Dioden 2 sind in einem Aluminiumblock 5 eingearbeitet. Dieser Aluminiumblock 5 enthält außerdem eine elektrische Heizung, die die gesamte Messeinrichtung bei einer konstanten Temperatur hält. Ebenso sind Strom und Spannung der Einrichtung durch bekannte Schaltungen und Bauelemente konstant gehalten. Beim Einsetzen einer Probe verändert sich die Lichtintensität des auf die Diode 2 auftreffenden Lichtes. Dieser Effekt wird als automatische Startfunktion der Einrichtung genutzt.

Das Verfahren zur Bestimmung der Extinktion der Lichtstrahlung einer Lichtquelle beim Durchdringen einer Probe werden durch das Hineinstellen einer Probe in die Probenaufnahme 4 automatisch die Startbedingungen eingestellt. Durch die anschließende Zugabe von Flüssigkeit zur Probe wird die Messung gestartet. Der Endwert der Messungen zur Endpunktbestimmung nach 90 s wird aus dem Anstieg mittels eines Mikroprozessors oder PC mit einer Spezialsoftware errechnet. Die Messwertänderungen pro Zeiteinheit werden nach einer Minute Verweilzeit im Verlauf von fünf Minuten simultan gemessen und der durchschnittliche Anstieg/ Minute errechnet. Das Verfahren ermöglicht die Messung mehrerer Proben gleichzeitig nebeneinander. Die Messwertausgabe erfolgt über einen Drucker, der in der Einrichtung integriert ist. Die Anzeige einer negativen Extinktion ist durch die Angleichung der Basisspannung für die Emission möglich. Der Einsatz von Rundküvetten ist durch eine Relativmessung möglich. Dabei wird das Streulicht kompensiert. Die einzelnen Proben werden mit einem Barcodeleser erfasst und zugeordnet.

## Patentansprüche

1. Einrichtung zur Bestimmung der Extinktion der Lichtstrahlung einer Emissionsquelle mit stabilisierter Emission durch getriggerte Anregungsbedingungen, beim Durchdringen von Proben mittels Lichtsensor und elektronischer Messwerterfassungseinheit, die die anlogen Messwerte der Extinktion in digitale Werte wandelt und bei Bedarf speichert, wobei an einem Ende eines Lichtschachtes die Emissionsquelle und am anderen Ende der Lichtsensor angeordnet ist,
**dadurch gekennzeichnet,**
**dass** die Emissionsquelle (1) Licht in einem Wellenbereich von 200 bis 600 nm aussendet, welches durch einen Lichtschacht (3) gerichtet ist, der Lichtschacht (3) durch eine Probenaufnahme (4) geteilt ist und dass am anderen Ende des Lichtschachtes (3) eine Diode (2) als Lichtsensor (2) mit einem eingeschränkten Empfangsbereich angeordnet ist, die die eintreffende Lichtintensität als Messwert der Messwerterfassungseinheit zuführt.

2. Einrichtung nach Anspruch 1,
**dadurch gekennzeichnet,**
**dass** mehrere Lichtschächte (3) mit jeweils einer Emissionsquelle (1), einem Lichtsensor (2) und einer Probenaufnahme (4) mit einer Simultanmessung angeordnet sind.

3. Einrichtung nach Anspruch 1 oder 2,
**dadurch gekennzeichnet,**
**dass** die Probenaufnahmen (4) mit ihren Lichtschächten (3) und Emissionsquellen (1) und Lichtsensoren (2) in einem Metallblock (5) angeordnet sind, der noch zusätzlich eine elektrische Heizung enthält.

4. Einrichtung nach einem der vorhergehenden Ansprüche,
**dadurch gekennzeichnet,**
**dass** in der Einrichtung ein Mikroprozessor und Drucker integriert ist.

5. Einrichtung nach einem der vorhergehenden Ansprüche,
**dadurch gekennzeichnet,**
**dass** die Einrichtung in einen Vorbereitungsbereich (6) mit Probenaufnahmen (4) ohne Lichtschächten (3) und in einen Messbereich (7) mit Probenaufnahmen (4) mit Emissionsquellen (1), Lichtschächten (3) und Lichtsensoren (2) geteilt ist.

6. Einrichtung nach einem der vorhergehenden Ansprüche,
**dadurch gekennzeichnet,**
**dass** sie mit einer automatischen Startfunktion durch die Lichtintensitätsänderung beim Einsetzen einer Probe ausgerüstet ist, die den Beginn des Messmodus schaltet.

7. Einrichtung nach einem der vorhergehenden Ansprüche,
**dadurch gekennzeichnet,**
**dass** der Strom und die Spannung der Einrichtung durch bekannte Bauelemente und Schaltungen konstant ist.

8. Verfahren zur Bestimmung der Extinktion der Lichtstrahlung einer Lichtquelle beim Durchdringen einer Probe, bestehend aus einem oder mehreren lichtdurchlässigen Probenbehältern und einer darin befindlichen Flüssigkeit,
**dadurch gekennzeichnet,**
**dass** beim Hineinstellen einer Probe in die Probenaufnahme (4) sich automatisch die Startbedingungen einstellen und dass anschließend bei der Zugabe einer weiteren Flüssigkeit zur Probe der Start der Messungen beginnt und dass bei der Messung der Extinktion z. B. bei Endpunktbestimmungen nach 90 s der weitere Funktionsverlauf mittels eines PC unter Verwendung einer Spezialsoftware errechnet wird.

9. Verfahren nach Anspruch 8,
**dadurch gekennzeichnet,**
**dass** kinetische Veränderungen pro Zeiteinheit ermittelt und im Verlauf von fünf Minuten simultan gemessen werden und der durchschnittliche Anstieg/Minute errechnet wird.

10. Verfahren nach einem der Ansprüche 8 und 9,
**dadurch gekennzeichnet,**
**dass** gleichzeitig mehrere Proben nebeneinander gemessen werden.

11. Verfahren nach einem der Ansprüche 8 bis 10,
**dadurch gekennzeichnet,**
**dass** die Meßwertausgabe über einen Drucker erfolgt.

12. Verfahren nach einem der Ansprüche 8 bis 11,
**dadurch gekennzeichnet,**
**dass** die Anzeige und Erfassung negativer Extinktion durch die Angleichung der Basisspannung für die Emission möglich ist.

13. Verfahren nach der Ansprüche 8 bis 12,
**dadurch gekennzeichnet,**
**dass** die einzelnen Proben mit einem Barcodeleser erfasst und zugeordnet werden.

14. Verfahren nach einem der Ansprüche 8 bis 13,
**dadurch gekennzeichnet,**
**dass** als Probenbehälter auch Rundküvetten durch eine Kompensation des Streulichts eingesetzt werden können.
